Europäisches Patentamt

European Patent Office

Office européen des brevets

(19)

(11) Publication number: **0 230 584**
A1

(12) **EUROPEAN PATENT APPLICATION**

(21) Application number: **86117057.9**

(22) Date of filing: **08.12.86**

(51) Int. Cl.³: **B 62 D 33/06**
**B 60 Q 1/04**

(30) Priority: **17.12.85 IT 5423885 U**

(43) Date of publication of application:
**05.08.87 Bulletin 87/32**

(84) Designated Contracting States:
**DE ES FR GB NL SE**

(71) Applicant: **IVECO FIAT S.p.A.**
**Via Puglia 35**
**I-10156 Torino(IT)**

(72) Inventor: **Savio, Piero**
**Via Boito, 1**
**I-10040 Borgaretto(IT)**

(74) Representative: **Prato, Roberto et al,**
**c/o Ingg. Carlo e Mario Torta Via Viotti 9**
**I-10121 Torino(IT)**

(54) Improvement in a heavy motor vehicle body.

(57) On the basis of the improvement according to the invention, two pairs of seats (5) are provided for the lamp units, of which those of a first pair are disposed on the front wall (2) of the vehicle cab and those of the other pair are disposed on the body bumper (4); there are also provided a first pair of headlamp units (7) and a second pair of direction indicator lamp units (8) to be mounted in said seats, those lamp units of each of said two pairs which are to be mounted on the same side of the body having the same shape and dimensions so that they can be mounted in the seats of either said first pair or said second pair at choice.

Fig.1

EP 0 230 584 A1

0230584

IMPROVEMENT IN A HEAVY MOTOR VEHICLE BODY

This invention relates to an improvement in a heavy motor vehicle body which comprises headlamp units and direction indicator lamp units each of which is housed in a corresponding seat provided in the front part of said body.

Headlamp units are required to be mounted on the vehicle in a position, of which the height from the ground can vary only between a lower limit and an upper limit defined by precise legal requirements.

Because of this restriction, the fact that the height of the headlamp units above the ground is thus essentially fixed means that their position varies substantially relative to the other parts of the cab front according to the overall height of the front itself and thus according to the vehicle size. If the vehicle is very large, the headlamp units have to be located in the lowest part of the cab front immediately above the bumper. In some cases in order to satisfy the aforesaid requirement bumpers of special type have to be provided of such structure and dimensions as to be able to still enable the said headlamp units to be housed on the body front at a height which does not exceed the said upper limit. In contrast, in vehicles of very small height the headlamp units have to be located in a high position on the cab front with the risk of interfering with other parts of the cab itself. Consequently, in both cases the design and structure of the parts and members located on the front of the body are influenced substantially by the requirement of having to

locate the headlamp units substantially at the same height from the ground independently of the vehicle size. Moreover, a uniform front design cannot be derfined which remains substantially unchanged in terms of the shape and dimensional ratios between the various elements in all the motor vehicles of a given series if this series comprises models of very different dimensions.

The object of the present invention is to improve a heavy motor vehicle body in such a manner as to obviate the aforesaid drawbacks.

This object is attained by an improvement in a heavy motor vehicle body comprising headlamp units and direction indicator lamp units each of which is housed in a corresponding seat provided in the front part of said body, characterised in that said body comprises:

two pairs of said seats of which the seats of a first pair are disposed in the front wall of the cab of the vehicle body at a first predetermined height from the ground, and the seats of the second pair are disposed in the body bumper at a second predetermined height from the ground, at least those headlamp seats of the two pairs located on the same side of the vehicle being equal to each other;

a first pair of headlamp units and a second pair of direction indicator lamp units arranged to be mounted in said seats, those lamp units of each of said two pairs which are to be mounted on the same side of the vehicle body having the same shape and dimensions, so as to be able to be mounted in the seats of either said first or said second pair at choice.

The present invention will be more apparent from the detailed description thereof given hereinafter by way of example with reference to the accompanying drawings in which:

Figure 1 is a diagrammatic perspective view of the front part of a heavy motor vehicle body of fairly small size, incorporating the improvement of the present invention;

Figure 2 is a diagrammatic perspective view of the front part of a large-size heavy motor vehicle body, incorporating the improvement of the present invention.

The improvement of the invention is applied to a heavy motor vehicle body of the type shown in the figures, comprising substantially a cab 1 provided with a front wall 2, a pair of side walls 3, and a bumper 4 disposed in correspondence with the said front wall and below it. According to the invention, a first pair of seats 5 for lamp units is disposed in the lower part of the front wall 2 of the cab 1 immediately above the bumper 4, and a second pair of seats 6 for said lamp units is disposed in the bumper 4. The seats of the first and second pair are disposed respectively at a first and at a second predetermined height from the ground. Said first and second heights lie between the upper and lower limits of the heights fixed by law for positioning the headlamp units. In addition, at least those headlamp seats of the two pairs which lie on the same side of the vehicle are equal to each other, as can be clearly seen from the figures. Finally, conveniently, those seats of the pairs which are disposed on the same side are aligned in the same vertical plane.

According to the invention, there are also provided a first pair of headlamp units 7 and a second pair of direction indicator lamp units 8, which are arranged for mounting in the seats 5 and 6 in the manner indicated hereinafter. Those lamp units of each of the two said pairs which are arranged for mounting on the same side of the vehicle body have the same shape and same dimensions so that they can be mounted at choice in either of the seats 5 and 6 of the first and second pair of seats respectively.

Conveniently, the profile of the front edges of each of the seats 5 and 6 and the profile of the front edges of each of the headlamp units and direction indicator units, 7 and 8 respectively, are of substantially trapezoidal shape.

According to the improvement of the invention, the following combinations can be implemented in mounting the lamp units of the two types.

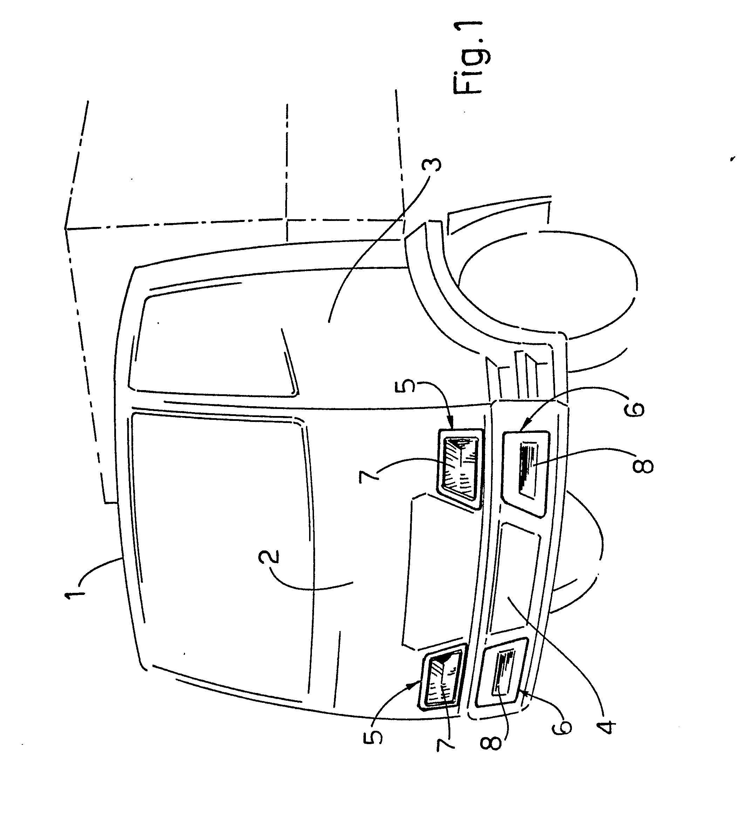

When a vehicle body of fairly small dimensions such as that of the vehicle shown in Figure 1 is to be fitted out, the headlamp units 7 are disposed in the first pair of seats 5 at the greater distance from the ground, and the indicator lamp units 8 are disposed below the preceding in the second pair of seats 6 in the bumper. This arrangement satisfies said legal requirements which prescribe a maximum height from the ground for mounting the headlamp units. In this respect, as the height of the first pair of seats 5 from the ground has been chosen according to the invention to coincide with the upper height limit fixed by the said legal requirements, the positioning of the headlamp units 7 will satisfy these legal requirements.

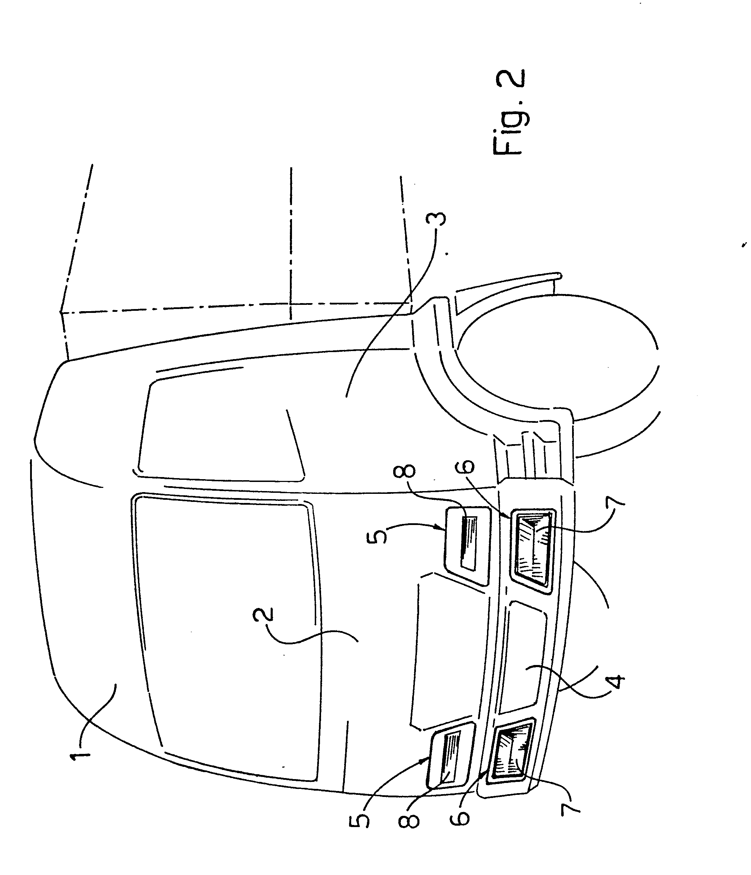

In contrast, when a large vehicle body such as that shown in Figure 2 is to be fitted out, the headlamp units 7 are mounted in the second pair of seats 6 provided in the bumper 4, whereas the direction indicator lamp units 8 are mounted in the seats 5 disposed in the front wall 2 of the cab 1. In this manner, as according to the invention the height of the second pair of seats 6 from the ground substantially coincides with the lower height limit fixed by law for positioning the headlamp units, the consequent positioning of the headlamp units will again satisfy these legal requirements.

It is apparent that important advantages are attained by the improvement according to the invention.

Firstly, the shape, dimensions and structure of the main elements located on the front of the vehicle body remain substantially unchanged whatever the vehicle size, and are not substantially influenced by said legal requirements which fix the headlamp height from the ground between two strictly defined limits.

Again, a substantially uniform design is obtained for said front, in which seats for lamp units are provided both in the lower part of the front wall 2 of the cab 1 and in the bumper 4. This arrangement can be repeated substantially unchanged in all vehicles of a series of models comprising vehicles of even very different dimensions.

Furthermore, the lamp units of the two pairs are very easily and quickly mounted because of the extreme accessibility of the relative seats, and their substantially unchanged position in all vehicles of the series, even if of different dimensions.

Finally, the shape and dimensions of the lamp units of the two pairs 7 and 8 can be standardised, as they have a front profile of the same shape and same dimensions, as stated.

Standardisation of these geometrical elements leads to important advantages from the constructional viewpoint, as said lamp units can comprise members and parts which are equal in both cases. This standardisation also provides advantages from the point of view of the supplementary operations such as storage and packaging of said lamp units.

It is apparent that modifications can be made to the described embodiment of the present invention, but without leaving the scope of the inventive idea.

In particular, the direction indicator lamp units of the second pair 8 can be replaced by other lamp units normally used on a motor vehicle, for example by side marker lamp units, if this function is not incorporated in the headlamp units 7. In such a case, said side marker lamp units can be used in the same manner as described with reference to the direction indicator lamp units 8, to obtain substantially the same advantages as stated heretofore.

Furthermore, even though the lamp units of the two pairs 7 and 8 have a substantially trapezoidal front profile, the improvement of the invention is applicable to lamp units of different shape. Obviously, the shape and dimensions of such lamp units are substantially the same as the corresponding seats of the two pairs 5 and 6. In particular, an embodiment can be provided in which the seats of the two pairs 5 and 6 and the lamp units of
the two pairs 7 and 8 have substantially the same shape and the
same dimensions.

## PATENT CLAIMS

1.      An improvement in a heavy motor vehicle body comprising headlamp units and direction indicator lamp units each of which is housed in a corresponding seat provided in the front part of said body, characterised in that said body comprises:
two pairs of said seats of which the seats of a first pair are disposed in the front wall of the cab of the vehicle body at a first predetermined height from the ground, and the seats of the second pair are disposed in the body bumper at a second predetermined height from the ground, at least those headlamp seats of the two pairs located on the same side of the vehicle being equal to each other;
a first pair of headlamp units and a second pair of direction indicator lamp units arranged to be mounted in said seats, those lamp units of each of said two pairs which are to be mounted on the same side of the vehicle body having the same shape and dimensions, so as to be able to be mounted in the seats of either said first or said second pair at choice.

2.      An improvement as claimed in claim 1, characterised in that said first and said second height from the ground of the seats of said two pairs lie between the upper and lower height limits fixed by law for positioning the headlamp units, or coincide with said limits.

3.      An improvement as claimed in claim 1 or 2, characterised in that said direction indicator units can be replaced by lamp units incorporating side marker lights.

4.      An improvement as claimed in one of the preceding claims, characterised in that the profile of the front edges of each of said seats and the profile of each of said lamp units is of substantially trapezoidal form.

Fig.1

- 11 -

0230584

Fig. 2

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 436 177 (ELLISTON)<br>* Figure 2 *<br><br>----- | 1 | B 62 D 33/06<br>B 60 Q 1/04 |

|  | TECHNICAL FIELDS SEARCHED (Int. Cl 4) |
|---|---|
|  | B 62 D<br>B 60 R<br>B 60 Q |

The present search report has been drawn up for all claims

| Place of search | Date of completion of the search | Examiner |
|---|---|---|
| THE HAGUE | 01-04-1987 | PIRIOU J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82